# FASCICULE DE BREVET EUROPEEN

(11) **EP 3 084 157 B1**
(45) Date de publication et mention de la délivrance du brevet: **14.03.2018**
(21) Numéro de dépôt: 14827818.7
(22) Date de dépôt: 11.12.2014
(51) Int. Cl.: F01N 3/10, F01N 3/20, F01N 3/22, F01N 3/30, F01N 9/00

(54) **SYSTÈME D'ÉCHAPPEMENT D'UN MOTEUR À COMBUSTION INTERNE ET PROCÉDÉ DE TRAITEMENT DES GAZ DE COMBUSTION**
ABGASANLAGE EINER BRENNKRAFTMASCHINE UND VERFAHREN ZUR BEHANDLUNG VON VERBRENNUNGSGASEN
EXHAUST SYSTEM OF AN INTERNAL COMBUSTION ENGINE AND METHOD FOR TREATING COMBUSTION GASES

(30) Priorité: 19.12.2013 FR 1362945
(43) Date de publication de la demande: 26.10.2016
(73) Titulaire: Renault s.a.s, 92100 Boulogne-Billancourt (FR)
(72) Inventeur: JEANDEL, Xavier, F-28320 Gas (FR); WOUTERS, Caroline, F-91260 Juvisy sur Orge (FR)
(86) Numéro de dépôt international: PCT/FR2014/053267
(87) Numéro de publication internationale: WO 2015/092224

(56) Documents cités:
- EP-A1- 0 736 676
- WO-A1-2013/045990
- FR-A1- 2 876 414
- US-A1- 2006 179 824
- US-A1- 2009 260 349

## Description

### DOMAINE TECHNIQUE DE L'INVENTION

L'invention concerne les moteurs à combustion interne équipés d'un catalyseur de réduction sélective d'oxydes d'azote.

Elle concerne plus particulièrement les moteurs fonctionnant en mélange pauvre, notamment les moteurs diesel, qui produisent de grandes quantités d'oxydes d'azote (NO**ₓ**) dans leurs gaz de combustion.

### ETAT DE LA TECHNIQUE

La réduction des émissions polluantes à l'échappement des moteurs à combustion interne, en particulier ceux des véhicules automobiles, qui sont soumis à des contraintes légales de plus en plus contraignantes, est un enjeu stratégique.

Pour ce faire, on a souvent recours à des systèmes de post-traitement des gaz de combustion des moteurs à combustion interne pour traiter les différents types de polluants (par exemple : monoxyde de carbone CO, hydrocarbures imbrûlés HC, oxydes d'azote NO**ₓ**, suies...) émis dans ces gaz.

Pour limiter les rejets dans l'atmosphère des molécules d'oxydes d'azote (NOx), qui sont nocives à la santé et à l'environnement, de nombreux moteurs sont équipés d'un catalyseur de réduction sélective d'oxydes d'azote, dit aussi catalyseur SCR (de l'acronyme anglais pour : Selective Catalytic Réduction).

De manière connue en soi, un tel catalyseur SCR vise à réduire en molécules inoffensives d'azote et d'eau les molécules d'oxydes d'azote (monoxyde d'azote NO et dioxyde d'azote NO₂) entrantes, sous l'action d'un réducteur qui est généralement de l'ammoniac, grâce à l'injection à l'entrée du catalyseur SCR d'un composé précurseur de l'ammoniac, usuellement une solution à base d'urée aqueuse (bien connue sous la dénomination commerciale Adblue©).

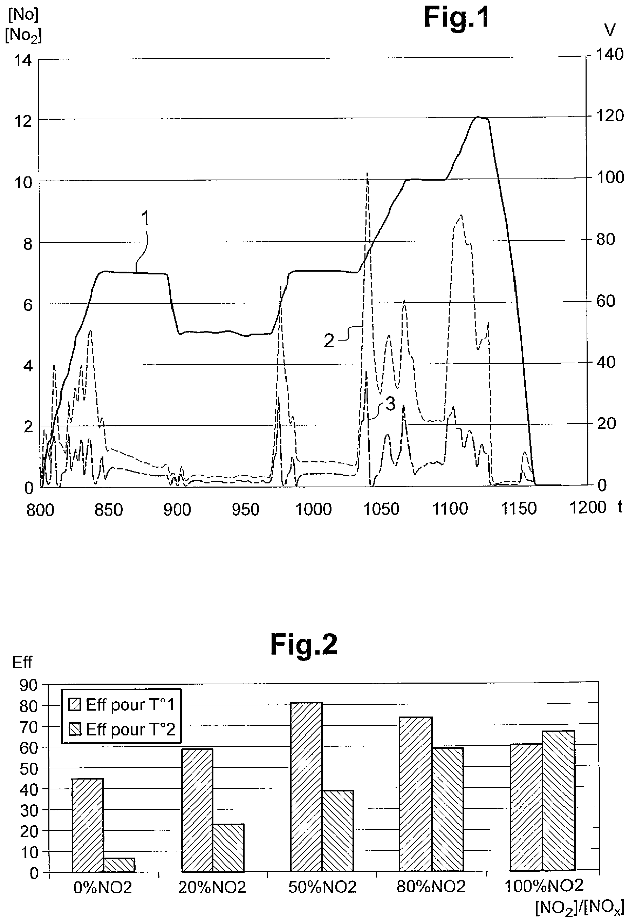

Les figures 1 et 2 illustrent l'intérêt de l'utilisation d'un catalyseur SCR.

Sur la figure 1, on a représenté en abscisse le temps t, et en ordonnée, d'une part (cf. échelle de gauche) la concentration molaire d'oxydes d'azote, et d'autre part (cf. échelle de droite) la vitesse V d'un véhicule automobile équipé d'un moteur à combustion interne, par exemple un moteur diesel.

La courbe 1 représente typiquement le profil de vitesse d'un véhicule sur une petite partie du cycle européen normalisé dit NEDC de la norme dite « euro5 ».

La courbe 2 représente l'évolution temporelle de la concentration d'oxydes d'azote [NO**ₓ**] totale, c'est-à-dire la somme de la concentration de monoxyde d'azote [NO] et de dioxyde d'azote [NO₂], mesurée dans les gaz de combustion du moteur, à la sortie de celui-ci, avant tout post-traitement des gaz.

La courbe 3 représente l'évolution temporelle de la concentration de dioxyde d'azote [NO₂], mesurée dans les mêmes conditions. Le fait que la courbe 3 ne se déduise pas de la courbe 2 par une simple homothétie indique que le ratio [NO₂]/[NO**ₓ**], c'est-à-dire le pourcentage de dioxyde d'azote [NO₂] dans la concentration totale d'oxydes d'azote [NO**ₓ**], n'est pas constant.

Ce ratio varie en fonction du point de fonctionnement du moteur et dépend notamment de la qualité de la combustion. Les réglages du moteur, qui sont effectués lors de la phase de mise au point, permettent de maîtriser dans une certaine mesure les différentes quantités de polluants (monoxyde de carbone CO, hydrocarbures imbrûlés HC, oxydes d'azote NO**ₓ**, suies...) émis par le moteur, mais ils ne permettent généralement pas d'ajuster le pourcentage de monoxyde d'azote [NO] et de dioxyde d'azote [NO₂] dans les émissions totales d'oxydes d'azote, ce pourcentage étant seulement constaté.

La masse d'oxydes d'azote produite par le moteur sur le cycle NEDC résulte du profil de concentration d'oxydes d'azote [NO**ₓ**] figuré sur une durée partie du cycle par la courbe 2. Plus précisément, il s'agit de l'intégrale temporelle sur toute la durée du cycle, du débit des gaz de combustion multiplié par la concentration d'oxydes d'azote [NOx] dans ces gaz.

Compte tenu de la sévérité de la législation, une telle masse d'oxydes d'azote, ou d'une manière équivalente, sa valeur moyennée par kilomètre parcouru sur le cycle NEDC, est généralement incompatible avec la limite autorisée (par exemple : 180 mg/km dans le cadre de la norme « euro5 »).

Alors, un catalyseur SCR monté à l'échappement du moteur permet de limiter les rejets dans l'atmosphère de l'oxyde d'azote produit dans les gaz de combustion du moteur, en réduisant en azote et en eau une fraction des molécules de NO**ₓ** sous l'action de l'ammoniac. On appelle efficacité du catalyseur SCR la fraction de NO**ₓ** ainsi traitée. La fraction non traitée des NO**ₓ** est quant à elle rejetée directement dans l'atmosphère.

La figure 2 illustre la variation d'efficacité Eff d'un catalyseur SCR en fonction de la température T des gaz entrant dans le catalyseur SCR, et du pourcentage de dioxyde d'azote dans la concentration totale d'oxydes d'azote présente dans lesdits gaz.

On constate que pour une température T1 représentative du fonctionnement courant du catalyseur SCR, par exemple typiquement comprise entre 250°C et 350°C à l'échappement d'un moteur diesel, l'efficacité Eff croît d'une valeur minimale d'environ 40% lorsque le pourcentage de NO₂, est égal à 0%, jusqu'à une valeur maximale de 80% lorsque le pourcentage de NO₂ est égal à 50%, et qu'elle décroît à nouveau jusqu'à 60% lorsque le pourcentage de NO**₂** continue d'augmenter de 50% à 100%.

Le fait que l'efficacité maximale soit obtenue pour une proportion égale de monoxyde et de dioxyde d'azote s'explique par les réactions chimiques mises en jeu dans le catalyseur SCR, conformément aux équations 1 à 3 suivantes :

(Eq.1) 2 NH₃ + NO + NO₂ → 2 N₂ + H₂O

(prépondérante lorsque le ratio [NO₂] / [NOx] est proche de 0,5) ;

(Eq.2) 2 NH₃ + NO + ½O₂ → 2 N₂ + 3 H₂O

(prépondérante lorsque le ratio [NO₂]/[NOx] est inférieur à 0,5) ; 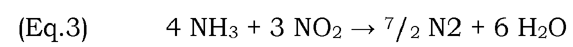 (prépondérante lorsque le ratio [NO₂]/[NOx] est supérieur à 0,5) ;

Aux températures de fonctionnement usuelles du catalyseur SCR, la première réaction est la plus favorable des trois en termes de cinétique, si bien que l'efficacité est la plus élevée. Ce cas se présente lorsque le pourcentage de NO₂ est égal à 50%.

On constate également sur la figure 2 que pour une température des gaz entrant dans le catalyseur T2 nettement plus basse que la température de fonctionnement courant T1 (typiquement : lors d'un fonctionnement à froid), l'efficacité Eff du catalyseur SCR est extrêmement sensible au pourcentage de NO₂. Plus précisément, l'efficacité est alors une fonction croissante de ce pourcentage de NO₂.

Lorsque le pourcentage de NO₂ est égal à 0%, le catalyseur SCR est presque totalement inopérant (efficacité inférieure à 10%). Lorsque le pourcentage de NO₂ est égal à 50%, l'efficacité Eff présente une valeur moyenne d'environ 40%, et au-dessus de 50% de NO₂, l'efficacité Eff continue d'augmenter jusqu'à une valeur d'efficacité maximale un peu supérieure à 60%, qui est finalement atteinte lorsque le pourcentage de NO₂ est égal à 100%.

Les émissions de NO**ₓ** qui font l'objet de la réglementation sont le résultat des NO**ₓ** produits par le moteur dans les gaz de combustion, pondéré par l'efficacité Eff du catalyseur SCR. Sur la totalité du cycle NEDC, la contribution à la masse de NO**ₓ** rejetée, des points de fonctionnement pour lesquels l'efficacité Eff du catalyseur SCR est faible, est compensée par la contribution les points de fonctionnement pour lesquels l'efficacité Eff est élevée.

Par exemple, il est souvent envisageable de respecter la masse maximale autorisée de NO**ₓ** par kilomètre de cycle NEDC même si au départ du cycle, qui se fait quand le véhicule est à l'arrêt, le moteur étant froid, l'efficacité Eff à froid du catalyseur SCR est inférieure à 10% (ce qui signifie qu'on rejette dans l'atmosphère extérieure plus des neuf dixièmes des NO**ₓ** émis par le moteur), dans la mesure où à d'autres moments du cycle, c'est-à-dire à chaud, l'efficacité Eff est élevée et permet de rejeter des quantités de NO**ₓ** très faibles.

Les futures réglementations visent à réduire encore plus les rejets d'oxydes d'azote dans l'atmosphère. En particulier, la norme européenne dite « euro6 » impose un seuil maximal de 80 mg/km. Il est aussi prévu que le cycle sur lequel les émissions sont calculées soit davantage représentatif des conditions d'utilisation réelles d'un véhicule automobile que le cycle NEDC.

Plus précisément, dans un tel cycle, le véhicule doit notamment subir de nombreuses accélérations. De telles conditions entraînent une surproduction d'oxydes d'azote NO**ₓ** et de dioxyde d'azote NO₂ par le moteur, comme le montrent les différents pics de concentration visibles sur les courbes 2 et 3 de la figure 1. En effet, pour accélérer le véhicule, on enrichit le mélange carburant/air pour la combustion dans le moteur afin d'en tirer davantage de couple, cet enrichissement favorisant la production d'oxydes d'azote.

Une autre conséquence est que le ratio [NO₂]/[NOx] a tendance à diminuer fortement, car le manque d'oxygène dans les gaz de combustion, qui est lié à l'enrichissement du mélange, contrarie la conversion du NO en NO₂ (selon l'équation : NO + ½ O₂ → NO₂).

Or, lorsque le pourcentage de NO₂ est sensiblement inférieur à 50%, on constate d'après la figure 2 que l'efficacité Eff du catalyseur SCR est amoindrie, quelle que soit par ailleurs la température du catalyseur. La perte d'efficacité est particulièrement marquée lorsque la température du catalyseur SCR est basse (température T2 sur la figure 2), par exemple lors d'un démarrage à froid.

Ainsi, la combinaison de l'augmentation des quantités de NO**ₓ** produites et de la diminution de l'efficacité du catalyseur SCR rend particulièrement difficile la maîtrise des niveaux de rejets de NO**ₓ** dans l'atmosphère.

On connaît plusieurs méthodes qui visent à résoudre ce problème. Par exemple, on peut chercher à amener le plus rapidement possible le catalyseur SCR à une température de fonctionnement minimale, à laquelle il est moins sensible au pourcentage de NO₂, par exemple 250°C. On peut notamment accélérer la montée en température des gaz de combustion du moteur par un apport thermique au démarrage du moteur, par exemple en réglant le moteur de manière à dégrader le rendement de combustion. Mais une telle méthode est coûteuse, consommatrice en carburant et elle a un impact sur les émissions d'autres types de polluants (HC, CO, etc...) du moteur, car on modifie le déroulement de la combustion.

On peut aussi disposer à l'échappement du moteur, en amont du catalyseur SCR, un catalyseur d'oxydation pour favoriser la transformation du monoxyde d'azote en dioxyde d'azote, c'est-à-dire pour augmenter le pourcentage de NO₂ à l'entrée du catalyseur SCR. Par cette augmentation, on vise à améliorer l'efficacité Eff du catalyseur SCR comme indiqué sur la figure 2.

Un tel catalyseur d'oxydation est généralement présent sur les moteurs fonctionnant en mélange pauvre, notamment les moteurs diesel. Par exemple, il peut se présenter sous la forme d'un catalyseur d'oxydation diesel ou « DOC » (acronyme anglais pour : Diesel Oxidation Catalyst), dont la tâche principale est d'oxyder les molécules de monoxyde de carbone CO et d'hydrocarbures imbrûlés HC produits par le moteur. Il peut aussi se présenter sous la forme d'un filtre à particules, dont la tâche principale est de stocker et de brûler les particules de suies émises par le moteur. Il peut encore se présenter sous la forme d'un piège à oxydes d'azote ou « Noxtrap » selon sa dénomination anglaise.

Chacun de ces catalyseurs d'oxydation permet, en plus de sa fonction principale, d'oxyder des molécules de monoxyde d'azote en molécules de dioxyde d'azote. Pour favoriser la réaction de réduction du monoxyde d'azote, on peut augmenter la charge en métaux précieux (platine, palladium, cérium...) de ces catalyseurs, mais une telle solution est très coûteuse, et elle ne permet pas d'ajuster le pourcentage de NO₂ sortant du catalyseur d'oxydation, c'est-à-dire le pourcentage de NO₂ entrant dans le catalyseur de réduction sélective. Elle ne permet donc pas de maîtriser la valeur de l'efficacité Eff du catalyseur SCR.

On connaît aussi de la publication WO2011/102781 un agencement et un procédé pour réduire la quantité d'oxyde d'azote dans les gaz d'échappement provenant d'un moteur à combustion interne.

L'agencement comprend au moins un capteur conçu pour détecter la valeur d'au moins un paramètre représentatif de la proportion de dioxyde d'azote rapportée à la quantité totale d'oxydes d'azote dans les gaz d'échappement dirigés vers un catalyseur de réduction des oxydes d'azote, et une unité de commande conçue pour recevoir des informations provenant du capteur afin de comparer la valeur du paramètre avec une valeur de consigne à laquelle les oxydes d'azote présentant une proportion idéale de dioxyde d'azote sont dirigés vers le catalyseur de réduction, et, dans les cas où les valeurs de paramètre reçues ne correspondent pas à la valeur de consigne, pour commander au moins un composant de l'agencement de telle sorte que la valeur de paramètre est réglée à une valeur qui corresponde à la valeur de consigne.

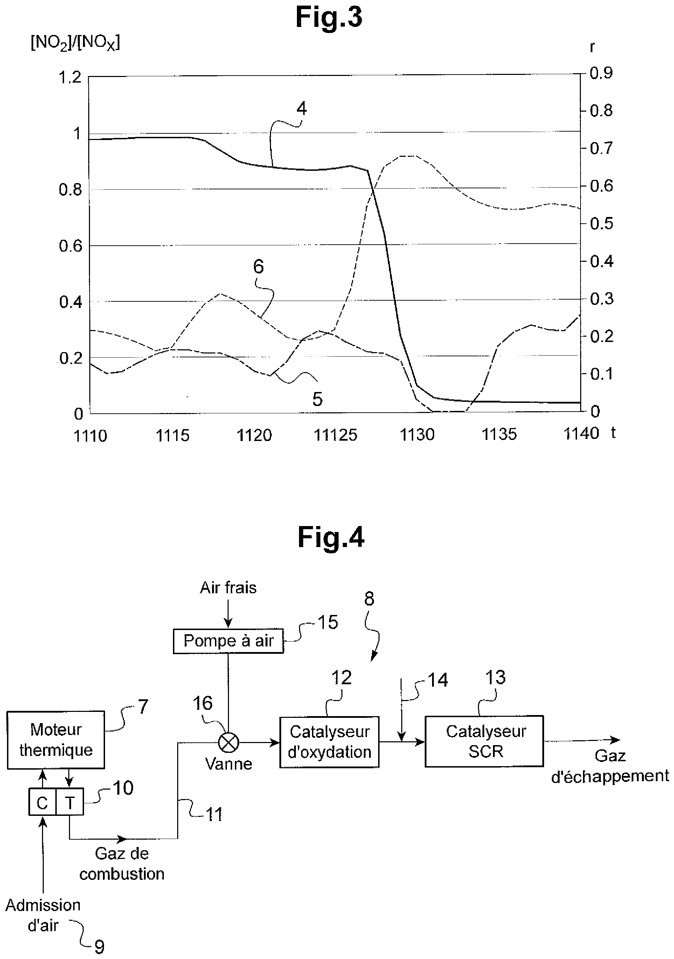

Un système de surveillance des gaz d'échappement permet de diriger ces gaz dans une branche secondaire munie d'un catalyseur d'oxydation lorsque le NO₂ est inférieur à une valeur de consigne. L'effet est alors d'augmenter la quantité de NO₂ dans les gaz d'échappement afin d'avoir une meilleure conversion dans le catalyseur de réduction des oxydes d'azote placé en aval. Mais un tel agencement est inopérant dans les cas où il existe un manque d'oxygène dans les gaz de combustion du moteur, comme on va maintenant l'expliquer en s'appuyant sur la figure 3.

Sur la figure 3, on a représenté en abscisse le temps, et en ordonnée, d'une part (échelle de gauche) le pourcentage de dioxyde d'azote, et d'autre part (échelle de droite) la richesse de fonctionnement d'un moteur, dans un catalyseur d'oxydation. La température des gaz d'échappement traversant le catalyseur d'oxydation est ici égale à 300°C.

La courbe 4 représente l'évolution temporelle de la richesse. Dans une première période la richesse est inférieure à 1 (moteur fonctionnant en mélange pauvre) mais néanmoins assez voisine de 1 (sur la figure : richesse comprise entre 0,8 et 1), puis elle diminue rapidement, entre les instants t = 1125 s et t = 1130 s, jusqu'à une valeur très faible, voisine de 0,05. Ce profil de richesse correspond par exemple à un début de décélération du véhicule provoqué par un levé de pied du conducteur.

Les courbes 5 et 6 représentent le pourcentage de NO₂ respectivement à l'entrée et à la sortie d'un catalyseur d'oxydation tel que celui qui peut être utilisé dans la publication WO2011/102781.

Tant que la richesse est élevée, c'est-à-dire tant que les gaz de combustion du moteur manquent d'oxygène, l'oxydation du monoxyde d'azote en dioxyde d'azote dans le catalyseur d'oxydation est contrariée, si bien que le pourcentage de NO₂ à la sortie du catalyseur d'oxydation est sensiblement égal au pourcentage de NO₂ à l'entrée.

Dans ces conditions, il n'est pas possible de régler la valeur de paramètre représentatif du pourcentage de NO₂ sur la valeur de consigne. Ce n'est qu'en présence d'un mélange pauvre que le catalyseur d'oxydation permet d'augmenter la valeur dudit paramètre. Par exemple, quand la richesse est sensiblement égale à 0,05, la figure 3 montre que le paramètre (qui correspond au pourcentage de NO₂ à la sortie du catalyseur d'oxydation sur la courbe 6) peut être augmenté jusqu'à une valeur voisine de 0,6.

### RESUME DE L'INVENTION

L'invention vise à résoudre les défauts des procédés connus qui visent à augmenter le ratio NO₂/NO**ₓ** à l'entrée d'un catalyseur SCR. Elle permet d'ajuster le rapport de la concentration en dioxyde d'azote [NO₂], divisée par la concentration en oxydes d'azote [NO**ₓ**] entrant dans un catalyseur SCR, à une valeur donnée.

On peut par exemple faire en sorte que le pourcentage de dioxyde d'azote soit toujours proche de 100%, par exemple supérieure à 80%, pour que l'Efficacité du catalyseur SCR soit assez élevée quelle que soit sa température.

On peut aussi prévoir de régler le pourcentage de dioxyde d'azote à une valeur qui maximise l'efficacité Eff de conversion du catalyseur SCR, en fonction de sa température.

A cet effet, l'invention propose un système de gestion des émissions selon la revendication 1. Cet agencement permet d'apporter un gaz oxydant, par exemple de l'oxygène O₂, au catalyseur d'oxydation et d'augmenter ainsi la fraction de NO oxydée en NO₂ par ce catalyseur d'oxydation de sorte que le ratio NO₂/NO**ₓ** à l'entrée du catalyseur de réduction sélective peut être augmenté. Ce gaz oxydant peut avantageusement être l'oxygène O₂ contenu dans l'air, notamment l'air prélevé dans l'atmosphère extérieure.

Le document US2009/0260349 A1 décrit un système d'injection d'air pour améliorer la durée de vie d'un catalyseur de réduction sélective pour des moteurs à essence. L'injection d'air abaisse la température des gaz d'échappement et rend pauvre le mélange, évitant l'exposition du catalyseur SCR à des conditions riches ou stoechiométriques. Un catalyseur d'oxydation est disposé entre l'injection d'air et le catalyseur de réduction sélective afin d'oxyder HC, CO et H₂ qui n'ont pas été éliminés dans un dispositif catalytique prévu à cet effet en amont de l'injection d'air.

Le catalyseur d'oxydation peut se présenter sous la forme d'un filtre à particules, d'une pièce à oxydes d'azote ou d'un catalyseur d'oxydation diesel ou autre, d'un type tel que décrit plus haut. Le catalyseur de réduction sélective est généralement alimenté en une solution aqueuse d'urée.

Le dispositif d'alimentation peut être agencé pour prélever de l'air dans l'atmosphère extérieure, tel que par exemple une pompe à air. L'ajout d'un dispositif de prélèvement de l'air extérieur peut toutefois s'avérer coûteux. Avantageusement, selon une autre variante, le dispositif d'alimentation peut être un circuit de dérivation apte à être raccordé à une conduite de suralimentation en air dudit moteur.

Cette conduite de suralimentation peut notamment relier un compresseur électrique ou un turbocompresseur au moteur.

Avantageusement, le moyen de réglage du débit de gaz oxydant peut être une vanne de régulation. Cette vanne peut par exemple être située sur la tubulure d'échappement, par exemple dans le cas d'un dispositif d'alimentation prélevant l'air extérieur. Lorsque le dispositif d'alimentation en gaz oxydant est agencé pour prélever de l'air dans l'atmosphère extérieure, le moyen de régulation du débit d'air peut également être intégré audit moyen d'alimentation.

Lorsque le dispositif d'alimentation en gaz oxydant est une conduite de dérivation, cette vanne peut également être située en amont de la conduite de dérivation, par exemple au point de raccordement de cette conduite de dérivation avec la conduite de suralimentation en air du moteur.

Avantageusement et de manière non limitative, le système d'échappement peut également comprendre des moyens de réchauffage du gaz oxydant entre ledit dispositif d'alimentation et ladite tubulure d'échappement, permettant d'homogénéiser la température du flux de gaz pénétrant dans le catalyseur d'oxydation. Ces moyens de réchauffage peuvent être un échangeur air/air ou un moyen de réchauffage électrique.

Une augmentation du ratio NO₂/NO**ₓ** à l'entrée du catalyseur de réduction sélective peut ainsi être obtenue en réglant le moyen de régulation de manière à injecter dans la tubulure d'échappement une quantité de gaz oxydant suffisante pour obtenir un taux de conversion du NO en NO₂ dans le catalyseur d'oxydation supérieur à un seuil donné, ceci sans contrôle de la température ou de la quantité de gaz oxydant dans les gaz de combustion entrant dans le catalyseur d'oxydation. Notamment, le moyen de régulation peut fournir un débit suffisant pour que le taux d'oxygène O₂ requis pour une oxydation optimale du NO en NO₂ soit atteint dans le catalyseur d'oxydation, un tel réglage pouvant être déterminé par des essais préalables sur un banc moteur.

Il est également possible d'envisager un contrôle du fonctionnement des catalyseurs d'oxydation et de réduction sélective. A cet effet, le système d'échappement peut alors également comprendre :
- des moyens de détermination d'un paramètre de concentration en gaz oxydant, par exemple en O₂, des gaz de combustion circulant dans ladite tubulure d'échappement, disposés en amont du dispositif d'alimentation en gaz oxydant, par exemple une sonde à O₂,
- et éventuellement des moyens de détermination d'un paramètre de température des gaz de combustion circulant dans ladite tubulure d'échappement, disposés en amont du dispositif d'alimentation en gaz oxydant, par exemple un capteur de température.

Ces moyens de détermination peuvent alors être reliés à un système de gestion du véhicule, par exemple un calculateur, commandant également le moyen de régulation, ce système de gestion étant agencé pour contrôler le ratio des concentrations [NO₂]/[NOₓ] en entrée du catalyseur de réduction sélective afin d'améliorer les performances de celui-ci.

Ce système de gestion est apte à être relié au moteur et au système d'échappement et comprend en outre :
- des moyens de réception :
   d'un paramètre de concentration en gaz oxydant, par exemple en O₂, des gaz de combustion, éventuellement d'un paramètre de température des gaz de réception, fourni(s) par lesdits moyens de détermination,
   de paramètres caractéristiques d'un point de fonctionnement du moteur,
      - des moyens de mémorisation agencés pour stocker au moins une cartographie et éventuellement au moins un modèle permettant de corréler un point de fonctionnement du moteur avec une quantité de gaz oxydant à fournir au catalyseur d'oxydation en fonction d'une température des gaz de combustion,
      - des moyens de traitement agencés pour déterminer, à partir des cartographies enregistrées dans les moyens de mémorisation et en fonction desdits paramètres caractéristiques du fonctionnement du moteur, dudit paramètre de concentration en gaz oxydant des gaz de combustion et éventuellement dudit paramètre de température, une quantité de gaz oxydant à ajouter aux gaz de combustion via le dispositif d'alimentation, et générer un signal de commande correspondant,
      - des moyens de transmission d'un signal de commande au moyen de réglage du débit de gaz oxydant.

Le paramètre de concentration peut être une concentration, un paramètre permettant de déterminer une concentration ou autre.

Le paramètre de température peut être une température, un paramètre permettant de déterminer une température ou autre.

Les paramètres caractéristiques d'un point de fonctionnement du moteur peuvent comprendre au moins le régime et la charge du moteur.

Les moyens de traitement sont agencés pour ajuster le ratio des concentrations [NO₂]/[NOₓ] à l'entrée du catalyseur de réduction sélective en fonction du point de fonctionnement du moteur et de la température des gaz de combustion.

En particulier, lorsque seuls des moyens de détermination de la concentration en gaz oxydant sont présents, les moyens de traitement peuvent procéder de la manière suivante :
- déterminer si le moteur est en fonctionnement à chaud ou à froid,
- si le moteur est en fonctionnement à froid, générer un signal de commande du moyen de régulation de manière à injecter dans la tubulure d'échappement une quantité de gaz oxydant suffisante pour obtenir une conversion du NO en NO₂ dans le catalyseur d'oxydation supérieure à un seuil donné,
- si le moteur est en fonctionnement à chaud,
   ∘ calculer un taux de conversion de NO en NO₂ qui doit être obtenu dans le catalyseur d'oxydation pour obtenir un ratio de concentrations [NO₂]/[NOₓ] prédéterminé en sortie du catalyseur,
   ∘ en déduire une quantité de gaz oxydant nécessaire pour obtenir le ratio [NO₂]/[NOₓ] prédéterminé et générer un signal de commande correspondant du moyen de régulation.

En variante, lorsque des moyens de détermination de la concentration en gaz oxydant et de la température sont présents, les moyens de traitement peuvent procéder de la manière suivante :
- déterminer un ratio de concentrations [NO₂]/[NOₓ] à l'entrée du catalyseur de réduction sélective optimisant l'efficacité de ce dernier,
- calculer un taux de conversion du catalyseur d'oxydation à atteindre pour obtenir ce ratio [NO₂]/[NOₓ] en fonction du point de fonctionnement du moteur et de la température des gaz d'échappement,
- en déduire une quantité de gaz oxydant nécessaire pour obtenir le ratio [NO₂]/[NOₓ] à atteindre et générer un signal de commande correspondant du moyen de régulation.

Ce système de gestion peut comprendre ou être intégré dans un ou plusieurs processeurs, par exemple des microcontrôleurs, des microprocesseurs ou autres.

Les moyens de réception peuvent comprendre une broche d'entrée, un port d'entrée ou autre.

Les moyens de mémorisation peuvent comprendre une mémoire RAM (de l'anglais « Random Access Memory »), une EEPROM (de l'anglais « (Electrically-Erasable Programmable Read-Only Memory »), ou autre. Ces moyens de mémorisation peuvent comprendre des cartographies :
- de la concentration en NO et NO₂ des gaz de combustion et des proportions de [NO]/[NOₓ], [NO₂]/[NOₓ] en fonction du point de fonctionnement du moteur,
- du taux de conversion de NO en NO₂ dans le catalyseur d'oxydation en fonction de la température des gaz de combustion,
- éventuellement de l'efficacité du catalyseur de réduction sélective en fonction du ratio [NO]/[NO₂] des gaz entrants et de leur température.

Les moyens de traitement peuvent par exemple comprendre un coeur de processeur ou CPU (de l'anglais « Central Processing Unit »). Les moyens de transmission peuvent par exemple comprendre un port de sortie, une broche de sortie ou autre.

L'invention concerne également un procédé de traitement d'un moteur à combustion interne comprenant :
(i) traiter les gaz de combustion émis par ledit moteur dans un catalyseur d'oxydation afin d'oxyder une partie du NO contenue dans les gaz de combustion en NO₂,
(ii) traiter les gaz sortant dudit catalyseur d'oxydation dans un catalyseur de réduction sélective des oxydes d'azote afin de réduire NO et NO₂ en N₂ et H₂O,
(iii) injecter en amont dudit catalyseur d'oxydation une quantité de gaz oxydant déterminée de manière à augmenter les quantités de NO et NO₂ réduits dans ledit catalyseur de réduction sélective des oxydes d'azote, cette détermination étant réalisée au moyen d'un système de gestion selon la revendication 1 pour contrôler le ratio des concentrations [NO₂]/ [NO] en entrée du catalyseur de réduction sélective.
Avantageusement, la quantité de gaz oxydant peut être déterminée en cours de fonctionnement du moteur en fonction de paramètres de fonctionnement du moteur, d'un paramètre de concentration en gaz oxydant, par exemple en O₂, des gaz de combustion avant le traitement de l'étape (i), et éventuellement d'un paramètre de température des gaz de combustion avant le traitement de l'étape (i), cette détermination étant réalisée à partir de corrélations :
- de la concentration en NO et NO₂ des gaz de combustion et des proportions de [NO]/[NOₓ], [NO₂]/[NOₓ] en fonction du point de fonctionnement du moteur,
- du taux de conversion de NO en NO₂ dans le catalyseur d'oxydation en fonction de la température des gaz de combustion,
- éventuellement de l'efficacité du catalyseur de réduction sélective en fonction du ratio [NO]/[NO₂] des gaz entrants et de leur température.

Cette détermination peut notamment être réalisée au moyen d'un système de gestion tel que décrit ci-dessus.

L'invention concerne enfin un véhicule automobile équipé d'un moteur à combustion interne, notamment à suralimentation en air, et d'un système de gestion selon l'invention.

### BREVE DESCRIPTION DES FIGURES

La figure 1 représente en abscisse le temps t, et en ordonnée, d'une part la concentration molaire d'oxydes d'azote, et d'autre part la vitesse V d'un véhicule automobile équipé d'un moteur à combustion interne, par exemple un moteur diesel.
La figure 2 illustre la variation d'efficacité Eff d'un catalyseur SCR en fonction de la température T des gaz entrant dans le catalyseur SCR, et du pourcentage de dioxyde d'azote dans la concentration totale d'oxydes d'azote présente dans lesdits gaz.
La figure 3 représente en abscisse le temps, et en ordonnée, d'une part le pourcentage de dioxyde d'azote, et d'autre part la richesse de fonctionnement d'un moteur, dans un catalyseur d'oxydation.
Les figures ci-dessus on déjà été décrites et ne seront pas détaillées à nouveau.

D'autres caractéristiques et avantages de l'invention apparaîtront à la lecture de la description de différents modes de réalisation non limitatifs de celle-ci, en s'appuyant sur les figures annexées dans lesquelles :
- La figure 4 est une représentation schématique d'un moteur suralimenté associé à un système d'échappement des gaz de combustion selon un premier mode de réalisation de l'invention ;

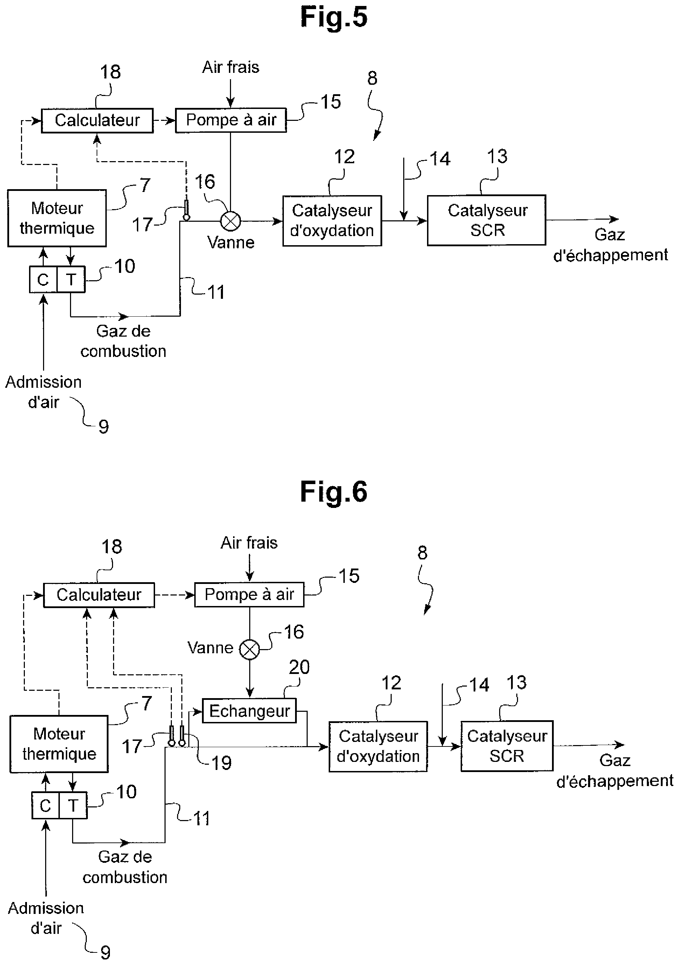

- La figure 5 est une représentation schématique d'une première variante du mode de réalisation de la figure 4 ;
- La figure 6 est une représentation schématique d'une deuxième variante du mode de réalisation de la figure 5 ;

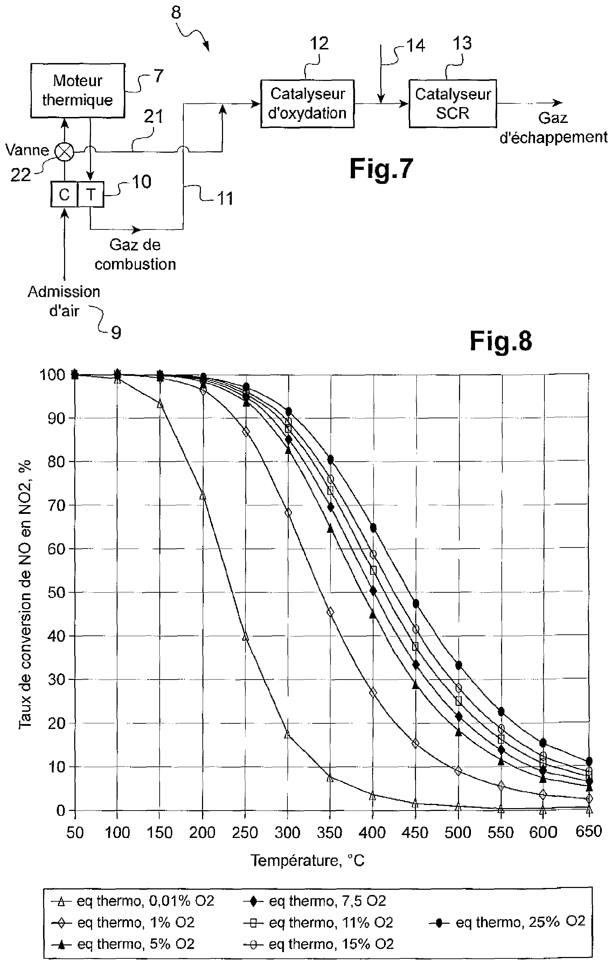

- La figure 7 est une représentation schématique d'un moteur suralimenté associé à un système d'échappement des gaz de combustion selon un deuxième mode de réalisation de l'invention ; et,
- La figure 8 est un graphique représentant la variation du taux de conversion du monoxyde d'azote en dioxyde d'azote dans un catalyseur d'oxydation, en fonction de la teneur en oxygène des gaz le traversant et de la température de ces gaz.

### DESCRIPTION DETAILLEE DES FIGURES

La figure 4 représente schématiquement un moteur 7 suralimenté associé à un système d'échappement 8 de ses gaz de combustion selon un premier mode de réalisation de l'invention.

Le moteur 7, par exemple un moteur diesel fonctionnant en mélange pauvre, est alimenté en air par un circuit d'admission d'air 9 qui comprend par exemple un filtre à air et au moins un conduit d'air frais.

Le moteur 7, du type suralimenté, est équipé ici d'un turbocompresseur 10 comprenant un compresseur C et une turbine T. De manière connue en soi, l'air admis prélevé dans l'atmosphère extérieure par le circuit d'admission 9 est comprimé dans le compresseur C du turbocompresseur avant d'être admis dans le moteur 7 de manière à en augmenter la densité, ce qui permet d'accroître les performances du moteur 7. L'énergie nécessaire à la compression de l'air par le compresseur C est fournie par la turbine T du turbocompresseur 10, qui est montée à l'échappement du moteur 7 et qui prélève cette énergie sur les gaz de combustion issus du moteur 7 en les détendant.

En variante (non représentée), le turbocompresseur 10 peut être remplacé par un compresseur C électrique, c'est-à-dire par un compresseur qui comprime l'air grâce à de l'énergie électrique prélevée sur une source de stockage, par exemple une batterie, et non pas grâce à l'énergie provenant d'une turbine.

Le système d'échappement 8 est monté en aval de la turbine T du turbocompresseur 10 (dans le sens de circulation des gaz de combustion), ou directement à la sortie du moteur 7 dans le cas où le moteur est suralimenté par un compresseur C électrique.

Il comprend, d'amont en aval dans le sens d'écoulement des gaz de combustion du moteur 7, une tubulure d'échappement 11, un catalyseur d'oxydation 12 des gaz de combustion et un catalyseur de réduction sélective des oxydes d'azote 13, dit aussi catalyseur SCR 13 (de l'acronyme anglais SCR pour : Selective Catalytic Réduction).

Le catalyseur d'oxydation 12 peut être, de manière non limitative, un filtre à particules 12, un piège à oxydes d'azote 12, ou un catalyseur d'oxydation diesel 12 apte à oxyder les hydrocarbures imbrûlés HC et le monoxyde de carbone CO émis en grande quantité par le moteur 7 fonctionnant en mélange pauvre. A l'intérieur du catalyseur d'oxydation 12, une fraction du monoxyde d'azote NO contenu dans les gaz de combustion du moteur 7 est transformée en dioxyde d'azote NO₂, dans des proportions qui sont illustrées par la figure 8 décrite plus bas.

Le catalyseur SCR 13 est, de manière connue en soi, alimenté en solution aqueuse d'urée (connue sous la dénomination commerciale Adblue©) par un tuyau d'alimentation 14 relié à l'une de ses extrémités à un réservoir (non représenté sur la figure), et débouchant à son autre extrémité à l'entrée du catalyseur SCR 13. Cette solution, injectée en continu dans le catalyseur SCR 13 réagit à l'intérieur du catalyseur SCR 13 avec les oxydes d'azote selon les équations 1, 2 et 3 exposées plus haut, avec une efficacité Eff qui est une fonction de la température T des gaz de combustion entrant dans le catalyseur SCR 13 et des proportions relatives de NO et de NO₂, dans lesdits gaz (cf. figure 2 décrite plus haut).

Selon l'invention, le système d'échappement 8 comprend en outre un dispositif d'alimentation 15 du catalyseur d'oxydation en gaz oxydants. De préférence, le gaz oxydant est de l'air. Le dispositif d'alimentation 15 se présente ici sous la forme d'une pompe à air 15, par exemple une pompe à air 15 électrique, qui introduit de l'air prélevé dans l'atmosphère extérieure à l'entrée du catalyseur d'oxydation 12, dans la tubulure d'échappement 11, dans des proportions réglables par l'intermédiaire d'une vanne de réglage 16.

En référence à la figure 8, il est possible d'utiliser simplement un tel système d'échappement 8 pour augmenter le rapport de la concentration de dioxyde d'azote NO₂ divisée par la concentration totale d'oxydes d'azote NOₓ à la sortie du catalyseur d'oxydation 12 à une valeur proche de 100%, par exemple 80%. De cette manière, ces gaz pénétrant ensuite dans le catalyseur SCR 13 y sont réduits avec une efficacité toujours assez élevée quelle que soit la température T des gaz, par exemple au moins 60% lorsque le pourcentage de dioxyde d'azote est de 80% (cf. figure 2).

En effet, la figure 8 est un graphique représentant la variation du taux de conversion du monoxyde d'azote en dioxyde d'azote dans un catalyseur d'oxydation, en fonction de la teneur en oxygène des gaz entrants et de la température T de ces gaz.

La température des gaz étant au plus égale à 350°C, on voit sur cette figure qu'un taux d'oxygène de 25% suffit à obtenir un taux de conversion du NO en NO₂ d'au moins 80%, quelle que soit la température effective des gaz.

Un tel résultat est obtenu sans avoir besoin de déterminer la température des gaz T elle-même. Il n'est pas davantage nécessaire de disposer de moyens de détermination de la concentration en oxygène des gaz, la vanne de réglage 16 pouvant être ouverte assez largement pour assurer que ledit taux d'oxygène est atteint ou dépassé. Le degré d'ouverture requis peut être prédéterminé au banc moteur par des essais préalables.

La figure 5 est une représentation schématique d'une première variante perfectionnée de système d'échappement de la figure 4, grâce à laquelle on peut ajuster la proportion de dioxyde d'azote à l'entrée du catalyseur SCR 13 à une valeur plus favorable de 50% lors du fonctionnement habituel du moteur, c'est-à-dire à chaud, lorsque la température des gaz d'échappement est comprise entre 250°C et 350°C. Il résulte de la figure 2 qu'une telle proportion de 50% de dioxyde d'azote permet d'obtenir le maximum d'efficacité Eff pour le catalyseur SCR 13, soit 80% sur la figure 2.

Les références de la figure 5 indiquent des éléments ou dispositifs identiques ou similaires à ceux de la figure 4, lesquels ne sont pas tous décrits.

Le système d'échappement 8 selon la figure 5 se distingue de celui de la figure 4 en ce qu'il comprend en outre des moyens de détermination de la concentration en oxygène 17 dans les gaz de combustion du moteur 7, par exemple une sonde à oxygène 17. Une telle sonde 17 est montée généralement en amont de la vanne de réglage 16.

Le fonctionnement du moteur 7 est piloté par un calculateur électronique 18 qui est relié au moteur lui-même, à la sonde à oxygène 17 et à la pompe à air 15.

Une mémoire du calculateur 18 contient une cartographie de la concentration en NO et en NO₂ des gaz de combustion et de leurs proportions relatives en fonction du point de fonctionnement du moteur déterminé par un ensemble de paramètres comprenant au moins le régime et la charge.

Une mémoire du calculateur 18 contient un modèle de la température des gaz de combustion en fonction du point de fonctionnement du moteur à chaud, et une valeur du temps écoulé depuis le démarrage du moteur qui permet de s'assurer d'un tel fonctionnement à chaud lorsque le temps écoulé est supérieur à un seuil S.

Une mémoire du calculateur 18 contient une cartographie du taux de conversion du monoxyde d'azote en dioxyde d'azote dans le catalyseur d'oxydation 12 conformément à la figure 8.

Ainsi, en fonction du point de fonctionnement du moteur 7, le calculateur 18 détermine les ratios de monoxyde d'azote [NO]/[NOₓ] et de dioxyde d'azote [NO₂]/[NOₓ] et la température T des gaz de combustion du moteur. Il vérifie également si le temps écoulé depuis le démarrage du moteur est supérieur au seuil S.

Si tel n'est pas le cas, le moteur est dans un mode de fonctionnement à froid qui ne permet pas d'utiliser le modèle de température. Comme pour le système d'échappement 8 présenté à la figure 4, le calculateur 18 règle le degré d'ouverture de la vanne 16 de façon que le taux d'oxygène dans les gaz entrant dans le catalyseur d'oxydation soit égal à 25%. Le débit d'air à injecter par la pompe 15, c'est-à-dire la quantité d'oxygène à apporter, est déterminé par différence avec le signal de concentration en oxygène des gaz de combustion fourni par la sonde à oxygène 17.

Dans le cas contraire, le moteur fonctionne à chaud. Le modèle de température T est utilisable. En fonction des ratios de monoxyde d'azote et de dioxyde d'azote dans les gaz de combustion, à l'entrée du catalyseur d'oxydation 12, le calculateur 18 calcule le taux de conversion du monoxyde d'azote en dioxyde d'azote qui doit être obtenu dans le catalyseur d'oxydation 12 pour que le taux de dioxyde d'azote soit augmenté à la valeur de 50% à la sortie de ce dernier.

Puis, en fonction de ce taux de conversion et de la température T, le calculateur 18 déduit de la cartographie selon la figure 8 la valeur de la concentration en oxygène des gaz dont il faut disposer à l'entrée du catalyseur d'oxydation. Le calculateur règle alors le degré d'ouverture de la vanne de réglage 16 pour augmenter la concentration en oxygène des gaz à la valeur souhaitée. L'apport d'oxygène nécessaire, c'est-à-dire le débit d'air nécessaire, est déterminé par différence avec la concentration en oxygène des gaz de combustion mesurée par la sonde à oxygène 17.

La figure 6 est une représentation schématique d'une deuxième variante perfectionnée de système d'échappement de la figure 4, grâce à laquelle on peut ajuster la proportion de dioxyde d'azote à l'entrée du catalyseur SCR 13 à une valeur qui maximise son efficacité Eff dans toutes les conditions de fonctionnement et notamment pour chaque valeur individuelle de température T.

Les références de la figure 6 indiquent des éléments ou dispositifs identiques ou similaires à ceux des figures 4 et 5.

Le système d'échappement 8 selon la figure 6 se distingue de celui de la figure 4 en ce qu'il comprend aussi, outre la sonde à oxygène 17 de la figure 5, des moyens de détermination de la température des gaz de combustion, par exemple un capteur de température 19 relié au calculateur 18.

Il comprend également des moyens de réchauffage 20 de l'air injecté par la pompe à air 15 avant son introduction dans la tubulure d'échappement 11. Par exemple, il peut s'agir d'un échangeur air/air, dans lequel la chaleur est amenée à l'air par les gaz de combustion du moteur 7, dont une partie du flux est dérivée dans l'échangeur. De tels moyens de réchauffage 20 permettent d'homogénéiser la température du flux de gaz pénétrant dans le catalyseur d'oxydation, ce qui favorise la conversion du monoxyde d'azote en dioxyde d'azote.

Dans une variante non représentée, les moyens de réchauffage 20 peuvent être un réchauffeur électrique.

Le calculateur 18 comprend en outre, dans une de ses mémoires, une cartographie CARTO de l'efficacité Eff du catalyseur SCR 13 en fonction du ratio de dioxyde d'azote [NO₂]/[NOₓ] dans les gaz entrants et de leur température T. On assimilera ici la température des gaz entrant dans le catalyseur SCR 13 à la température des gaz de combustion mesurée par le capteur de température 19, le débit d'air extérieur plus frais à apporter par la pompe à air 15, et susceptible d'abaisser la température des gaz de combustion, étant faible.

Pour la température T des gaz, mesurée par le capteur de température 19, le calculateur 18 détermine le ratio de dioxyde d'azote [NO₂]/[NOₓ] à l'entrée du catalyseur SCR 13 qui maximise l'efficacité Eff de celui-ci, en utilisant la cartographie CARTO d'efficacité.

Puis, en fonction du point de fonctionnement (régime, charge, ...) du moteur 7, et de la cartographie indiquant les concentrations en NO et en NO₂ des gaz de combustion et leurs proportions relatives en fonction dudit point de fonctionnement, le calculateur 18 calcule le taux de conversion du monoxyde d'azote en dioxyde d'azote à atteindre dans le catalyseur d'oxydation 12.

Le calculateur 18 déduit ensuite, par application de la cartographie de taux de conversion du monoxyde d'azote en dioxyde d'azote dans le catalyseur d'oxydation 12, la valeur de la concentration en oxygène des gaz entrants dans le catalyseur 12 qui permet d'assurer ce taux de conversion pour cette valeur de température T mesurée.

Enfin, le calculateur règle le débit d'air amené par la pompe à air 15 pour obtenir une telle concentration en oxygène, en agissant sur l'ouverture de la vanne 16. Ce débit d'air, c'est-à-dire plus précisément la quantité d'oxygène qu'il contient, est calculé par différence avec la quantité d'oxygène déjà contenue dans les gaz de combustion et dont la concentration est mesurée par la sonde à oxygène 17.

La figure 7 est une représentation schématique d'un moteur suralimenté associé à un système d'échappement des gaz de combustion 8 selon un deuxième mode de réalisation de l'invention.

Ce mode de réalisation diffère du mode représenté à la figure 4 en ce que l'air frais n'est pas fourni au catalyseur d'oxydation par un dispositif d'alimentation 15 en gaz oxydants, tel qu'une pompe à air, qui prélève de l'air dans l'atmosphère extérieure, mais par un circuit de dérivation d'une partie de l'air suralimenté du moteur 7.

Plus précisément, le moteur est équipé d'un tuyau de dérivation 21 de l'air suralimenté, c'est-à-dire compressé par le compresseur C du turbocompresseur 10, qui prend naissance entre le compresseur et le moteur et qui débouche dans la tubulure d'échappement 11 à l'entrée du catalyseur d'oxydation. Une vanne à trois voies 22 permet de réguler le débit d'air suralimenté prélevé.

Le mode de fonctionnement du système d'échappement selon la figure 7 peut être mutatis mutandis le même que celui de la figure 4. Il présente l'avantage de ne pas nécessiter l'adjonction d'un composant coûteux tel qu'une pompe à air.

L'invention n'est pas limitée aux modes de réalisation qui viennent d'être décrits. En particulier, on pourra prévoir de perfectionner le mode de réalisation décrit à la figure 7 de manière similaire aux perfectionnements du premier mode selon les figures 5 et 6, c'est-à-dire en prévoyant pour ce deuxième mode une sonde à oxygène pour mesurer la concentration en oxygène des gaz de combustion, ainsi qu'un capteur de température T des gaz de combustion et des moyens de réchauffage de l'air suralimenté.

## Revendications

1. Système de gestion des émissions d'un moteur à combustion interne, notamment d'un moteur à combustion interne à suralimentation en air, ledit moteur comprenant un système d'échappement (8) comprenant, d'amont en aval dans le sens d'écoulement des gaz de combustion issus du moteur : une tubulure d'échappement (11), un catalyseur d'oxydation (12) des gaz de combustion, un catalyseur de réduction sélective des oxydes d'azote (13), et comprenant, en amont dudit catalyseur d'oxydation (12), un dispositif d'alimentation (15, 21) en gaz oxydant raccordé à ladite tubulure (11) et un moyen de réglage (16, 22) du débit de gaz oxydant fourni à ladite tubulure (11), et en amont du dispositif d'alimentation en gaz oxydant (15, 21), des moyens de détermination d'un paramètre de concentration en gaz oxydant, par exemple en O₂, des gaz de combustion circulant dans ladite tubulure d'échappement (11), et éventuellement des moyens de détermination d'un paramètre de température des gaz de combustion circulant dans ladite tubulure d'échappement (11), le système de gestion étant apte à être relié au moteur et audit système d'échappement, **caractérisé en ce que** le système de gestion est agencé pour contrôler le ratio des concentrations [NO₂]/[NOₓ] en entrée du catalyseur de réduction sélective et comprend :
- des moyens de réception :
d'un paramètre de concentration en gaz oxydant, par exemple en O₂, des gaz de combustion, éventuellement d'un paramètre de température des gaz de combustion, fourni(s) par lesdits moyens de détermination,
de paramètres caractéristiques d'un point de fonctionnement du moteur,
∘ des moyens de mémorisation agencés pour stocker au moins une cartographie et au moins un modèle permettant de corréler un point de fonctionnement du moteur avec une quantité de gaz oxydant à fournir au catalyseur d'oxydation en fonction d'une température des gaz de combustion ,
- des moyens de traitement agencés pour ajuster le ratio des concentrations [NO₂]/[NOₓ] à l'entrée du catalyseur de réduction sélective en fonction du point de fonctionnement du moteur et éventuellement de la température des gaz de combustion et pour déterminer, à partir des cartographies enregistrées dans les moyens de mémorisation et en fonction desdits paramètres caractéristiques du fonctionnement du moteur, dudit paramètre de concentration en gaz oxydant des gaz de combustion et éventuellement dudit paramètre de température, une quantité de gaz oxydant à ajouter aux gaz de combustion via le dispositif d'alimentation (15, 21), et générer un signal de commande correspondant,
- des moyens de transmission d'un signal de commande au moyen de réglage (16, 22) du débit de gaz oxydant.

2. Système de gestion selon la revendication 1, **caractérisé en ce que** ladite au moins une cartographie stockée dans les moyens de mémorisation est une cartographie :
- de la concentration en NO et NO₂ des gaz de combustion et des proportions de [NO]/[NOₓ], [NO₂]/[NOₓ] en fonction du point de fonctionnement du moteur,
- du taux de conversion de NO en NO₂ dans le catalyseur d'oxydation en fonction de la température des gaz de combustion,
- éventuellement de l'efficacité du catalyseur de réduction sélective en fonction du ratio [NO]/[NO₂] des gaz entrants et de leur température.

3. Procédé de traitement des gaz de combustion d'un moteur à combustion interne comprenant :
(i) traiter les gaz de combustion émis par ledit moteur dans un catalyseur d'oxydation (12) afin d'oxyder une partie du NO contenue dans les gaz de combustion en NO₂,
(ii) traiter les gaz sortant dudit catalyseur d'oxydation (12) dans un catalyseur de réduction sélective des oxydes d'azote (13) afin de réduire NO et NO₂ en N₂ et H₂O,
(iii) injecter en amont dudit catalyseur d'oxydation (12) une quantité de gaz oxydant déterminée de manière à augmenter les quantités de NO et NO₂ réduits dans ledit catalyseur de réduction sélective des oxydes d'azote (13), cette détermination étant réalisée au moyen d'un système de gestion selon l'une quelconque des revendications 1 ou 2 pour contrôler le ratio des concentrations [NO₂]/[NOₓ] en entrée du catalyseur de réduction sélective.

4. Procédé de traitement selon la revendication 3, dans lequel la quantité de gaz oxydant est déterminée en cours de fonctionnement du moteur en fonction de paramètres de fonctionnement du moteur, d'un paramètre de concentration en gaz oxydant, par exemple en O₂, des gaz de combustion avant le traitement de l'étape (i), et éventuellement d'un paramètre de température des gaz de combustion avant le traitement de l'étape (i), cette détermination étant réalisée à partir de corrélations :
de la concentration en NO et NO₂ des gaz de combustion et des proportions de [NO]/[NOₓ], [NO₂]/[NOₓ] en fonction du point de fonctionnement du moteur,
du taux de conversion de NO en NO₂ dans le catalyseur d'oxydation en fonction de la température des gaz de combustion,
éventuellement de l'efficacité du catalyseur de réduction sélective en fonction du ratio [NO]/[NO₂] des gaz entrants et de leur température.

5. Véhicule automobile équipé d'un moteur à combustion interne et d'un système d'échappement (8) d'un moteur à combustion interne (7) comprenant, d'amont en aval dans le sens d'écoulement des gaz de combustion issus du moteur : une tubulure d'échappement (11), un catalyseur d'oxydation (12) des gaz de combustion, un catalyseur de réduction sélective des oxydes d'azote (13), et comprenant, en amont dudit catalyseur d'oxydation (12), un dispositif d'alimentation (15, 21) en gaz oxydant raccordé à ladite tubulure (11) et un moyen de réglage (16, 22) du débit de gaz oxydant fourni à ladite tubulure (11), et, en amont du dispositif d'alimentation en gaz oxydant (15, 21), des moyens de détermination d'un paramètre de concentration en gaz oxydant, par exemple en O₂, des gaz de combustion circulant dans ladite tubulure d'échappement (11), **caractérisé en ce que** ledit véhicule automobile comprend en outre un système de gestion selon la revendication 1 ou 2.

6. Véhicule automobile selon la revendication 5, **caractérisé en ce que** le dispositif d'alimentation du système d'échappement est choisi parmi un dispositif d'alimentation (15) agencé pour prélever de l'air dans l'atmosphère extérieure, par exemple une pompe à air et un circuit de dérivation (11) apte à être raccordé à une conduite de suralimentation en air dudit moteur.

7. Véhicule automobile selon l'une des revendications 5 ou 6, **caractérisé en ce que** le moyen de réglage dudit système d'échappement est une vanne de régulation.

8. Véhicule automobile selon l'une quelconque des revendications 5 à 7, **caractérisé en ce que** le système d'échappement comprend des moyens de réchauffage du gaz oxydant entre ledit dispositif d'alimentation (15, 21) et ladite tubulure d'échappement (11).

9. Véhicule automobile selon l'une quelconque des revendications 5 à 8, **caractérisé en ce que** le système d'échappement comprend des moyens de détermination d'un paramètre de température des gaz de combustion circulant dans ladite tubulure d'échappement (11), disposés en amont du dispositif d'alimentation en gaz oxydant (15, 21).

## Patentansprüche

1. Emissionsmanagementsystem einer Brennkraftmaschine, insbesondere einer Brennkraftmaschine mit Luftaufladung, die Kraftmaschine umfassend eine Abgasanlage (8), umfassend stromaufwärts nach stromabwärts in der Strömungsrichtung der aus der Kraftmaschine kommenden Verbrennungsgase: eine Abgasleitung (11), einen Oxidationskatalysator (12) der Verbrennungsgase, einen Katalysator zur selektiven Reduktion der Stickoxide (13), und umfassend, stromaufwärts des Oxidationskatalysators (12), eine Vorrichtung (15, 21) zur Versorgung mit oxidierendem Gas, die mit der Leitung (11) verbunden ist, und ein Mittel zum Einstellen (16, 22) des Durchflusses von oxidierendem Gas, das der Leitung (11) zugeführt wird, und stromaufwärts der Vorrichtung zur Versorgung mit oxidierendem Gas (15, 21) Mittel zur Bestimmung eines Konzentrationsparameters eines oxidierenden Gases, beispielsweise O₂, der Verbrennungsgase, die in der Abgasleitung (11) zirkulieren, und eventuell Mittel zur Bestimmung eines Temperaturparameters der Verbrennungsgase, die in der Abgasleitung (11) zirkulieren,
wobei das Managementsystem mit der Brennkraftmaschine und der Abgasanlage verbindbar ist, **dadurch gekennzeichnet, dass** das Managementsystem angeordnet ist, das Verhältnis der [NO₂]-/[NO_{X}]-Konzentrationen am Eingang des Katalysators zur selektiven Reduktion zu steuern, und Folgendes umfasst:
- Mittel zum Empfangen:
eines Konzentrationsparameters eines oxidierenden Gases, beispielsweise O₂, der Verbrennungsgase, eventuell eines Temperaturparameters der Verbrennungsgase, der/die von den Mitteln zur Bestimmung geliefert wurden,
von charakteristischen Parametern eines Betriebspunkts der Brennkraftmaschine,
∘ Mittel zur Speicherung, die angeordnet sind, mindestens eine Kartografie und mindestens ein Modell zu speichern, die es erlauben, einen Betriebspunkt der Brennkraftmaschine mit einer Menge eines oxidierenden Gases, die in Abhängigkeit von einer Temperatur der Verbrennungsgase an den Oxidationskatalysator geliefert werden soll, in Korrelation zu bringen,
- Mittel zur Behandlung, die angeordnet sind, das Verhältnis der [NO₂]-/[NO_{X}]-Konzentrationen am Eingang des Katalysators zur selektiven Reduktion in Abhängigkeit von dem Betriebspunkt der Brennkraftmaschine und eventuell der Temperatur der Verbrennungsgase einzustellen, und anhand der Kartografien, die in den Mitteln zur Speicherung gespeichert sind, und in Abhängigkeit von den charakteristischen Parametern des Betriebs der Brennkraftmaschine, des Konzentrationsparameters eines oxidierenden Gases der Verbrennungsgase und eventuell des Temperaturparameters, eine Menge von oxidierendem Gas zu bestimmen, die den Verbrennungsgasen über die Vorrichtung zur Versorgung (15, 21) hinzugefügt werden soll, und ein entsprechendes Steuerungssignal zu erzeugen,
- Mittel zur Übertragung eines Steuerungssignals an das Mittel zum Einstellen (16, 22) des Durchflusses von oxidierendem Gas.

2. Managementsystem nach Anspruch 1, **dadurch gekennzeichnet, dass** die mindestens eine Kartografie, die in den Mitteln zur Speicherung gespeichert ist, eine Kartografie:
- der NO- und NO₂-Konzentration der Verbrennungsgase und der Proportionen von [NO]/[NO_{X}], [NO₂]/[NO_{X}] in Abhängigkeit von dem Betriebspunkt der Brennkraftmaschine ist,
- der Rate der Umwandlung von NO in NO₂ in dem Oxidationskatalysator in Abhängigkeit von der Temperatur der Verbrennungsgase ist,
- eventuell der Wirksamkeit des Katalysators zur selektiven Reduktion in Abhängigkeit von dem Verhältnis von [NO]/[NO₂] der eintretenden Gase und deren Temperatur ist.

3. Verfahren zur Behandlung von Verbrennungsgasen einer Brennkraftmaschine, umfassend:
(i) Behandeln der Verbrennungsgase, die von der Brennkraftmaschine abgegeben werden, in einem Oxidationskatalysator (12), um einen Teil des NO, das in den Verbrennungsgasen enthalten ist, zu NO₂ zu oxidieren,
(ii) Behandeln der austretenden Gase des Oxidationskatalysators (12) in einem Katalysator zur selektiven Reduktion der Stickoxide (13), um NO und NO₂ zu N₂ und H₂O zu reduzieren,
(iii) Einspritzen, stromaufwärts des Oxidationskatalysators (12), einer bestimmten Menge von oxidierendem Gas, um die Mengen von NO et NO₂, die in dem Katalysator zur selektiven Reduktion der Stickoxide (13) reduziert werden, zu erhöhen, wobei diese Bestimmung mithilfe eines Managementsystems nach einem der Ansprüche 1 oder 2 durchgeführt wird, um das Verhältnis der [NO₂]-/[NO_{X}]-Konzentrationen am Eingang des Katalysators zur selektiven Reduktion zu steuern.

4. Verfahren zur Behandlung nach Anspruch 3, wobei die Menge von oxidierendem Gas während des Betriebs der Brennkraftmaschine in Abhängigkeit von Betriebsparametern der Brennkraftmaschine, eines Konzentrationsparameters eines oxidierenden Gases, beispielsweise O₂, der Verbrennungsgase, vor der Behandlung des Schritts (i) und eventuell eines Temperaturparameters der Verbrennungsgase vor der Behandlung des Schritts (i) bestimmt wird, wobei diese Bestimmung anhand folgender Korrelationen durchgeführt wird:
der NO- und NO₂-Konzentration der Verbrennungsgase und der Proportionen von [NO]/[NO_{X}], [NO₂]/[NO_{X}] in Abhängigkeit von dem Betriebspunkt der Brennkraftmaschine,
der Rate der Umwandlung von NO in NO₂ in dem Oxidationskatalysator in Abhängigkeit von der Temperatur der Verbrennungsgase,
eventuell der Wirksamkeit des Katalysators zur selektiven Reduktion in Abhängigkeit von dem Verhältnis von [NO]/[NO₂] der eintretenden Gase und deren Temperatur.

5. Kraftfahrzeug, das mit einer Brennkraftmaschine und einer Abgasanlage (8) einer Brennkraftmaschine (7) ausgerüstet ist, umfassend, von stromaufwärts nach stromabwärts in der Strömungsrichtung der aus der Kraftmaschine kommenden Verbrennungsgase: eine Abgasleitung (11), einen Oxidationskatalysator (12) der Verbrennungsgase, einen Katalysator zur selektiven Reduktion der Stickoxide (13), und umfassend, stromaufwärts des Oxidationskatalysators (12), eine Vorrichtung (15, 21) zur Versorgung mit oxidierendem Gas, die mit der Leitung (11) verbunden ist, und ein Mittel zum Einstellen (16, 22) des Durchflusses von oxidierendem Gas, das der Leitung (11) zugeführt wird, und, stromaufwärts der Vorrichtung zur Versorgung mit oxidierendem Gas (15, 21), Mittel zur Bestimmung eines Konzentrationsparameters eines oxidierenden Gases, beispielsweise O₂, der Verbrennungsgase, die in der Abgasleitung (11) zirkulieren,
**dadurch gekennzeichnet, dass** das Kraftfahrzeug ferner ein Managementsystem nach Anspruch 1 oder 2 umfasst.

6. Kraftfahrzeug nach Anspruch 5, **dadurch gekennzeichnet, dass** die Vorrichtung zur Versorgung der Abgasanlage aus einer Vorrichtung zur Versorgung (15), die angeordnet ist, Luft aus der Außenatmosphäre zu entnehmen, beispielsweise einer Luftpumpe, und einem Umgehungskreis (11), der an eine Leitung zur Luftaufladung der Brennkraftmaschine anschließbar ist, ausgewählt ist.

7. Kraftfahrzeug nach einem der Ansprüche 5 bis 6, **dadurch gekennzeichnet, dass** das Mittel zum Einstellen der Abgasanlage ein Regelventil ist.

8. Kraftfahrzeug nach einem der Ansprüche 5 bis 7, **dadurch gekennzeichnet, dass** die Abgasanlage Mittel zum Aufwärmen des oxidierenden Gases zwischen der Vorrichtung zur Versorgung (15, 21) und der Abgasleitung (11) umfasst.

9. Kraftfahrzeug nach einem der Ansprüche 5 bis 8, **dadurch gekennzeichnet, dass** die Abgasanlage Mittel zum Bestimmen eines Temperaturparameters der Verbrennungsgase umfasst, die in der Abgasleitung (11) zirkulieren, die stromaufwärts der Vorrichtung zur Versorgung mit oxidierendem Gas (15, 21) angeordnet sind.

## Claims

1. System for controlling the emissions of an internal combustion engine, in particular of an air-supercharged internal combustion engine, said engine comprising an exhaust system (8) comprising, from upstream to downstream in the flow direction of the combustion gases from the engine: an exhaust manifold (11), a combustion gas oxidation catalyst (12), a catalyst (13) for the selective reduction of the nitrogen oxides, and comprising, upstream of said oxidation catalyst (12), an oxidizing gas feed device (15, 21) connected to said manifold (11) and a means (16, 22) for regulating the flow rate of oxidizing gas supplied to said manifold (11), and upstream of the oxidizing gas feed device (15, 21), means for determining an oxidizing gas concentration parameter, for example an O₂ concentration parameter, of the combustion gases circulating in said exhaust manifold (11), and optionally means for determining a temperature parameter of the combustion gases circulating in said exhaust manifold (11),
the control system being able to be connected to the engine and to said exhaust system, **characterized in that** the control system is arranged in order to control the ratio of the [NO₂]/[NOₓ] concentrations at the inlet of the selective reduction catalyst and comprises:
- means for receiving:
an oxidizing gas concentration parameter, for example an O₂ concentration parameter, of the combustion gases, optionally a temperature parameter of the combustion gases, said parameters being supplied by said determining means,
characteristic parameters of an operating point of the engine,
o memorizing means arranged to store at least one map and at least one model that make it possible to correlate an operating point of the engine with an amount of oxidizing gas to be supplied to the oxidation catalyst as a function of a temperature of the combustion gases,
- treatment means arranged to adjust the ratio of the [NO₂]/[NOₓ] concentrations at the inlet of the selective reduction catalyst as a function of the operating point of the engine and optionally of the temperature of the combustion gases and to determine, from the maps recorded in the memorizing means and as a function of said characteristic parameters of the operation of the engine, of said oxidizing gas concentration parameter of the combustion gases and optionally of said temperature parameter, an amount of oxidizing gas to be added to the combustion gases via the feed device (15, 21), and to generate a corresponding control signal,
- means for transmitting a control signal to the means (16, 22) for regulating the flow rate of oxidizing gas.

2. Control system according to Claim 1, **characterized in that** said at least one map stored in the memorizing means is a map:
- of the concentration of NO and NO₂ in the combustion gases and of the proportions of [NO]/[NOₓ], [NO₂]/[NOₓ] as a function of the operating point of the engine,
- of the degree of conversion of NO to NO₂ in the oxidation catalyst as a function of the temperature of the combustion gases,
- optionally of the efficiency of the selective reduction catalyst as a function of the [NO]/[NO₂] ratio of the incoming gases and the temperature thereof.

3. Process for treating the combustion gases of an internal combustion engine comprising:
(i) treating the combustion gases emitted by said engine in an oxidation catalyst (12) in order to oxidize a portion of the NO contained in the combustion gases into NO₂,
(ii) treating the gases leaving said oxidation catalyst (12) in a catalyst (13) for the selective reduction of the nitrogen oxides in order to reduce NO and NO₂ to N₂ and H₂O,
(iii) injecting, upstream of said oxidation catalyst (12) a determined amount of oxidizing gas so as to increase the amounts of NO and NO₂ reduced in said catalyst (13) for the selective reduction of the nitrogen oxides, this determination being carried out by means of a control system according to either one of Claims 1 and 2 in order to control the ratio of the [NO₂]/[NOₓ] concentrations at the inlet of the selective reduction catalyst.

4. Treatment process according to Claim 3, in which the amount of oxidizing gas is determined during operation of the engine as a function of operating parameters of the engine, of an oxidizing gas concentration parameter, for example an O₂ concentration parameter, of the combustion gases before the treatment of step (i), and optionally of a temperature parameter of the combustion gases before the treatment of step (i), this determination being carried out from correlations:
of the concentration of NO and NO₂ in the combustion gases and of the proportions of [NO]/[NOₓ], [NO₂]/[NOₓ] as a function of the operating point of the engine,
of the degree of conversion of NO to NO₂ in the oxidation catalyst as a function of the temperature of the combustion gases,
optionally of the efficiency of the selective reduction catalyst as a function of the [NO]/[NO₂] ratio of the incoming gases and the temperature thereof.

5. Motor vehicle equipped with an internal combustion engine and with an exhaust system (8) of an internal combustion engine (7) comprising, from upstream to downstream in the flow direction of the combustion gases from the engine: an exhaust manifold (11), a combustion gas oxidation catalyst (12), a catalyst (13) for the selective reduction of the nitrogen oxides, and comprising, upstream of said oxidation catalyst (12), an oxidizing gas feed device (15, 21) connected to said manifold (11) and a means (16, 22) for regulating the flow rate of oxidizing gas supplied to said manifold (11), and upstream of the oxidizing gas feed device (15, 21), means for determining an oxidizing gas concentration parameter, for example an O₂ concentration parameter, of the combustion gases circulating in said exhaust manifold (11),
**characterized in that** said motor vehicle additionally comprises a control system according to Claim 1 or 2.

6. Motor vehicle according to Claim 5, **characterized in that** the feed device of the exhaust system is chosen from a feed device (15) arranged to draw off air from the outside atmosphere, for example an air pump and a branch circuit (11) suitable for being connected to an air-supercharging line of said engine.

7. Motor vehicle according to either of Claims 5 and 6, **characterized in that** the means for regulating said exhaust system is a control valve.

8. Motor vehicle according to any one of Claims 5 to 7, **characterized in that** the exhaust system comprises means for reheating the oxidizing gas between said feed device (15, 21) and said exhaust manifold (11).

9. Motor vehicle according to any one of Claims 5 to 8, **characterized in that** the exhaust system comprises means for determining a temperature parameter of the combustion gases circulating in said exhaust manifold (11), positioned upstream of the oxidizing gas feed device (15, 21).
